# EUROPEAN PATENT APPLICATION

(11) **EP 0 877 360 A2**
(43) Date of publication of application: **11.11.1998**
(21) Application number: 98106604.6
(22) Date of filing: 09.04.1998
(51) Int. Cl.: G11B 15/62

(54) **Apparatus and method of controlling tape wander using head zenith biasing**

(30) Priority: 08.05.1997 US 852887
(71) Applicant: Hewlett-Packard Company, Palo Alto, California 94304 (US)
(72) Inventor: Hoerger, Carl Robert, Boise, ID 83702 (US); Gonzales, Curtis P., Boise, ID 83703 (US)
(74) Representative: Schoppe, Fritz, Dipl.-Ing.

(57) **Abstract**

A tape guide device (10, 110, 210) has a support base (22) and a pair of tape guides (12, 14, 112, 114, 212, 214) carried by the base (22) on spaced and substantially parallel axes (33, 35). Each tape guide (12, 14, 112, 114, 212, 214) has a slide contact section (40, 42, 140, 142) and at least one tape guide element (26, 30, 126, 130) for engaging one edge (38) of a ribbon tape (20) movably supported therealong. A magnetic head (16, 116, 216) has a tape sliding surface (18, 118, 218) supported for engagement with the ribbon tape (20), the tape sliding surface (18, 118, 218) presented for engagement with the ribbon tape (20) at a Zenith angle (36) relative to the tape guide axes (33, 35). Application of travel tension on the tape (20) as it runs over the magnetic head (16, 116, 216) and tape guides (12, 14, 112, 114, 212, 214) creates a transverse force on the tape (20), biasing the tape one edge (38) against the tape guide elements (26, 30, 126, 130) of the pair of tape guides (12, 14, 112, 114, 212, 214) so as to reduce tape wander. A method for imparting such a bias via a Zenith angle (36) positioning of a magnetic head (16, 116, 216) in relation to the tape guides (12, 14, 112, 114, 212, 214) is also disclosed.

## Description

### FIELD OF THE INVENTION

This invention relates generally to magnetic information storage and retrieval, and more particularly to tape guide systems for magnetic tape information storage and retrieval devices and products.

### BACKGROUND OF THE INVENTION

Magnetic tape information storage and retrieval systems are constantly improving in terms of performance, reduced component complexity, and cost. Applications abound for magnetic tape storage systems in the areas of audio, video and data storage/retrieval. As consumers demand ever improving performance, while at the same time expecting prices to remain level, or even decrease, product designers have struggled to improve performance and concomitantly simplify the designs.

As an example, tape information storage products for use with computer systems in the form of backup applications for networks and personal computers have recently seen a growth in demand. However, savvy customers in the computer hardware and software arena have come to expect performance improvements that nearly double every two to three years, with concurrent decreases in price. Such expectations have arisen to a large extent as a result of microprocessor and memory device improvements. So also have these expectations driven the development of tape information storage products for computer backup systems. Similar consumer expectations have arisen in the areas of magnetic tape cassette apparatus such as those in use with audio tape players/recorders, video cameras, and video cassette recorders (VCRs).

This invention particularly concerns tape information storage and retrieval products having one or more magnetic heads and a plurality of tape guides configured to ensure aligned travel of a ribbon tape over the magnetic head(s). A transport system delivers the ribbon tape over a head having a common write gap line and one common read gap line with a plurality of individual read or write coils per track. For example, eighteen or twenty-four parallel tracks can be recorded on a ribbon tape. The tape guides are positioned on either side of the head, in order to assure proper attack, or inclination, angle and alignment of the tape with the read/write gaps of the head. Track position is dictated by the tape guides, with track width being regulated by the physical dimensions of the cores within the head. Of critical importance is the fact that accurate alignment between the tape and head must be achieved in order to realize repeatable read/write operation.

Also of critical importance is the sizing of the sliding surface relative to the width of the magnetic tape. If the sliding surface is narrower, or shorter, than the tape width, the tape will be distorted along the edges as it travels across the sliding surface, resulting in damage to the tape. If the sliding surface is wider than the tape width, the tape will tend to wander as it travels across the sliding surface, moving laterally of the tape travel direction, causing read/write problems between the head and the tape. It becomes difficult, if not impossible, to precisely size the sliding surface relative to the tape width, since tape width can vary from tape to tape, and can even change over time for a given tape being used. Even further, it tends to cost more to produce a tape guide having a precisely sized sliding surface.

Several recent attempts have been made to ensure alignment of a ribbon magnetic tape over a magnetic head. These techniques can be applied to magnetic tape guide assemblies for use with magnetic tape cartridges, or with loose-ended magnetic tape assemblies (cartridge-less) having a supply and a take-up reel such as those used in audio and computer applications. One such tape guide device disclosed in U.S. Patent No. 5,218,501 utilizes a biasable flat spring, mounted on a barrel roller mechanism, to frictionally engage a top edge of a magnetic tape. The spring is mounted so as to enable adjustment of the force applied to the top edge of the tape, and to further enable adjustment of the contact angle between the tape and the spring. Other similar designs use conical springs to positively bias and engage an edge guide with an edge of a magnetic tape.

Another tape guide device disclosed in U.S. Patent No. 5,253,135 is a magnetic head having a pair of projections on its tape sliding surface disposed to span a magnetic tape received between the projections, the ends of the pad making contact with the projections. The magnetic tape is pressed against the tape sliding surface by the pad, but with a reduced pressure since the projections substantially support the pad. In this manner, the pad cannot exert too much pressure on the tape, which might otherwise create excessive friction along the tape sliding surface and result in wow and flutter along the tape associated with tape speed instability.

Yet another tape guide device disclosed in U.S. Patent No. 5,610,787 is a tape guide device for a magnetic tape apparatus having two pairs of tape guide elements, each having upper and lower tape edge guiding limbs. One pair of the elements is arranged one to each side of the head, adjacent the head. The elements of the second pair are arranged further outward from the head, one to each side. The positions of the guide limbs on the first pair and the second pair are arranged in order that a magnetic tape having a minimum tape width will have one edge in contact with a corresponding limb on each of the first pair, and the other edge in contact with the other corresponding limb on each of the second pair.

Yet even another tape guide device disclosed in U.S. Patent No. 5,134, 536 is a magnetic head having a tape guide for regulating the path of tape travel such that a wider range of errors is allowed for the angle of attachment of the head to the recording/reproducing system, improving the reliability and slidability during use at high temperatures. A ribbon tape is run along a tape guide sized to force the tape toward a restrictive member via a slide contact section of a sloped section. A stopper is provided along the slide contact section opposite the restrictive member to prevent the tape from moving toward the sloped section. The width of the slide contact section is preferably equal to or less than the width of the ribbon tape. However, this technique tends to curl the edge of the magnetic tape as it runs over the stopper of the sloped section.

### SUMMARY OF THE INVENTION

This invention provides a tape guide device having a carrier, or support base for carrying a pair of tape guides on the base on spaced and substantially parallel axes. Each tape guide has a slide contact section and at least one tape guide element for engaging one edge of a ribbon tape movably supported therealong. A magnetic head having a tape sliding surface is supported for engagement with the ribbon tape. The tape sliding surface is presented for engagement with the ribbon tape at a Zenith angle relative to the tape guide axes. The application of travel tension on the tape as it runs over the magnetic head and tape guides creates a transverse force on the tape, biasing the tape one edge against the tape guide elements of the pair of tape guides so as to reduce tape wander.

This invention also provides a method of controlling tape wander. According to this method, a pair of tape guides are provided on spaced and substantially parallel axes. A ribbon tape is presented for travel across the pair of tape guides, each tape guide having a slide contact section and at least one tape guide element for engaging one edge of a ribbon tape movably supported therealong. A tape sliding surface of a magnetic head is presented for contact with the ribbon tape at a Zenith angle with the tape guide axes. Tension is applied on the tape for moving the tape over the magnetic head and tape guides so as to create a transverse force on the tape, basing the tape one edge against the tape guide elements of the pair of tape guides so as to reduce tape wander.

The tape guide device includes at least two tape guides arranged in a substantially parallel configuration to guide a magnetic ribbon tape along a tape travel path. Each tape guide has a slide contact section and at least one tape guide element for engaging one edge of the tape. A magnetic head is positioned between the pair of tape guides at a Zenith angle with the guide axes. Additionally, the head is positioned relative to the tape guides so as to impart an approach angle and a departure angle along the top and bottom edges of the tape, between the tape and the head on the entry and exit sides, respectively. Application of travel tension by a tape drive mechanism on the tape as it runs over the magnetic head and tape guides creates a transverse force on the tape, biasing the tape one edge against the tape guide elements of the pair of tape guides so as to reduce tape wander.

The tape guide device is also designed to guide a ribbon-shaped magnetic tape with little or no wander with a tape guide apparatus having a simplified construction with a reduced number of parts, making construction, maintenance and repair easier and more cost effective. Additionally, the reduced number of moving parts significantly reduces overall component wear.

The method of this invention includes the steps of providing a pair of tape guides on spaced parallel axes; presenting a ribbon tape for travel across the pair of tape guides, each tape guide having a slide contact section and at least one tape guide element for engaging one edge of a ribbon tape movably supported therealong; presenting a tape sliding surface of a magnetic head for contact with the ribbon tape at a Zenith angle with the tape guide axes; and applying tension on the tape for moving the tape over the magnetic head and tape guides so as to create a transverse force on the tape, biasing the tape one edge against the tape guide elements of the pair of tape guides so as to reduce tape wander.

### DESCRIPTION OF THE DRAWINGS

Preferred embodiments of the invention are described below with reference to the following accompanying drawings depicting examples embodying the best mode for practicing the invention.

Fig. 1 is a simplified, perspective view schematic drawing of a magnetic tape guide device according to this invention.

Fig. 2 is a right side view of the magnetic tape guide device of Fig. 1 illustrating a Zenith angle between the magnetic head and guide rollers.

Fig. 3 is a plan view of the magnetic tape guide device of Fig. 1.

Fig. 4 is a simplified, perspective view schematic drawing of an alternative tape guide device according to this invention.

Fig. 5 is a simplified, perspective view schematic drawing of yet another alternative tape guide device according to this invention.

### DETAILED DESCRIPTION OF THE INVENTION

This disclosure of the invention is submitted in furtherance of the constitutional purposes of the U.S. Patent Laws "to promote the progress of science and useful arts". U.S. Constitution, Article 1, Section 8.

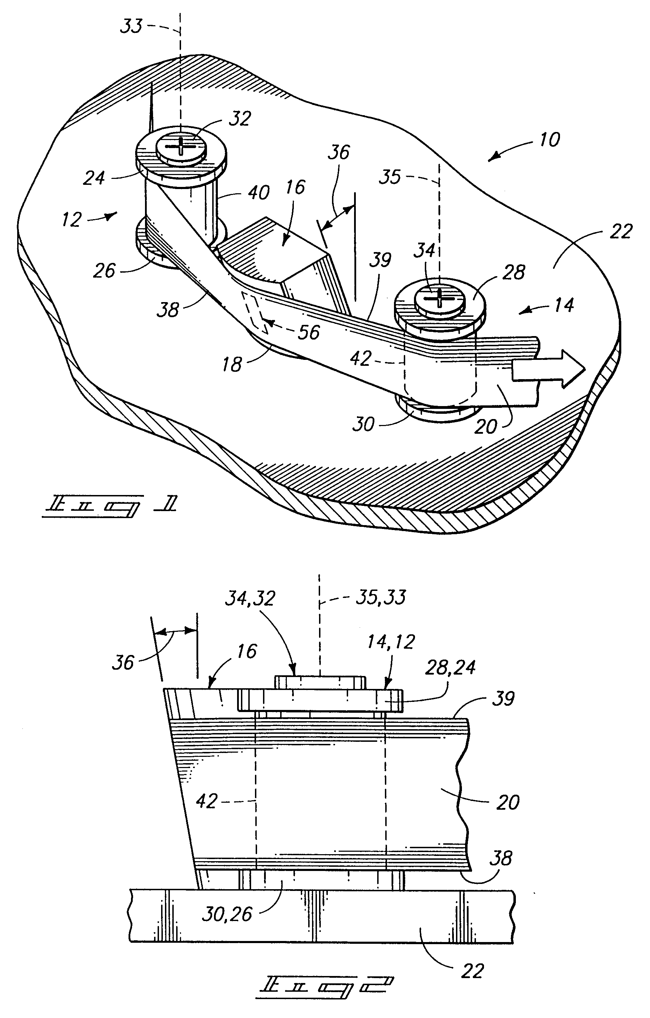

Figure 1 illustrates an apparatus in the form of a tape guide device 10 suitable for realizing the apparatus and method of this invention. Preferably, tape guide device 10 is implemented in the form of a pair of tape guides 12 and 14 carried on either side of a magnetic head 16 so as to present a tape sliding surface 18 of head 16 for slidably receiving a ribbon of magnetic tape 20. Tape guides 12 and 14 are supported on spaced and substantially parallel axes 33, 35, respectively, by a base 22. Preferably, the axes are parallel. According to one implementation, base 22 forms a support structure of a magnetic tape cassette apparatus usable to read a tape of a magnetic tape cassette. According to another implementation, base 22 forms a support carriage for receiving a loose-ended magnetic tape assembly (cartridge-less tape assembly) having a supply and a take-up reel such as those used in audio and computer applications. With either implementation, it is understood that more that one magnetic head can be provided between tape guides 12 and 14. Additionally, more than two tape guides can be provided for delivering and guiding tape 20 over head(s) 16.

As shown in Figure 1, tape guides 12 and 14 each have a pair of top and bottom tape guide elements 24, 26 and 28, 30, respectively, supported in spaced apart relation a distance at least as wide as the width of tape 20. Preferably, tape guides 12 and 14 form rotating guide mechanisms in the form of a tape guide bearing, with tape guide elements 24, 26 and 28, 30 forming flange members on the top and bottom of tape contact surfaces 40 and 42, respectively. Alternatively, tape guides 12 and 14 can form static, non-rotating guide mechanisms in the form of a tape guide bearing, with tape guide elements 24, 26 and 28, 30 and tape sliding surfaces 40 and 42 also being static. Further alternatively, surfaces 40 and 42 can be static, with guide elements 24, 26 and 28, 30 rotating. Even further alternatively, surfaces 40 and 42 can rotate, with guide elements 24, 26 and 28, 30 also rotating. Yet even further, guide elements 28, 30 can be eliminated from one of the tape guides 14. According to such an implementation, the remaining tape guide 12 would present a tape guide element 26 for engaging an edge of tape 20.

For purposes of this disclosure it is to be understood that a tape guide device and a tape drive can be mounted in any orientation such that a tape drive can be mounted within a computer, on a rack, or in a separate computer peripheral device. Hence, top and bottom are used as relative terms to distinguish the case where tape 20 is seen in plan view, when viewed in an elevational view. Such terms should not be interpreted as limitations, but instead, are provided for the convenience of adding explanation and clarity to the description of one suitable operating configuration for the device and method of this invention.

According to Figure 1, tape guides 12 and 14 are mounted in a rotating configuration atop base 22 via a threaded retaining fastener 32 and 34, respectively. Tape guide elements 24, 26 and 28, 30 are preferably cylindrical flange members. Alternatively, tape guides 12 and 14 can be mounted for non-rotation atop base 22. Tape 22 is carried for movement across tape guides 12 and 14 by a tape drive mechanism (not shown). Fasteners 32 and 34 are received centrally of guides 12 and 14, respectively, such that guides 12 and 14 present tape contact surfaces, or contact sections, 40 and 42 on spaced and substantially parallel axes. Preferably, tape contact surfaces 40 and 42 are each formed in the shape of a cylinder. Accordingly, tape 20 is drawn across each of surfaces 40 and 42 with a substantially similar orientation. However, head 16 is positioned between surfaces 40 and 42 with tape sliding surface 18 being presented at a Zenith, or bias, angle 36 relative to surfaces 40 and 42.

Head 16 is also provided between surfaces 40 and 42 so as to divert the otherwise straight-line travel path of tape 20 between guides 12 and 14 in order to ensure positively biased engagement of tape 20 traveling over head 16 while it is being written to/read from. By tilting head 16 relative to the inner take-off surfaces of surfaces 40 and 42 at such a Zenith angle 36, a bias force is created relative to guides 12 and 14 which drives tape 20, when under tension, against bottom tape guide elements 26 and 30 along a bottom edge 38. As a tape drive mechanism (not shown) applies tension across tape 20, tape 20 is deflected over head 16 as top edge 39 is stretched to a greater extent than bottom edge 38. Such biased stretching, or deflection of tape 20 creates a transverse force on tape 20, moving it against guides 12 and 14, and into biased engagement with bottom tape guide elements 26 and 30. Preferably, the stretch of tape 20 is elastic stretch.

It is to be understood that the form of each tape guide 12 and 14 can vary, as long as each guide has a tape contact section and at least one tape guide element for engaging one edge of a ribbon tape being movably supported therealong. Guides 12 and 14 can also be formed from one or fixed, or non-rotating, parts. For example, surfaces 40 and 42 can be fixed to form sliding surfaces, while elements 26, 28 and 30, 32 can be provided for rotation. Alternatively, guides 12 and 14 can rotate, while elements 26, 28 and 30, 32 are fixed. Even further alternatively, elements 24 and 28 can be eliminated since head biasing via Zenith angle 36 drives tape 20 downwardly away from elements 24 and 28.

For purposes of this disclosure, it is to be understood that the term "magnetic head" is intended to refer to a single read and/or write head, a head in which both a head for reading/writing and an erase head are incorporated into a single member, or a group or plurality of heads forming an integral member or assembly.

Also for purposes of this disclosure, it is to be understood that the term "Zenith angle" is intended to refer to an inclination or bias angle between the tape sliding surface of a magnetic head and the tape sliding surfaces, or adjacent take-off points, of a pair of laterally disposed tape guides, one provided on each side of the head. Such "Zenith angle" can be applied by a head being positioned so as to divert the tape from an otherwise straight-line travel path between the tape guides with the head on the same side of the tape as the guides, or on an opposite side of the tape from the guides. It is to be understood that the tape can be guided in any orientation in use, and that the use of the word "Zenith" is not intended to be limited to any reference relating to any point of a celestial sphere located directly above an observer. Head 16 can be presented with a vertical sliding surface 18, whereas guides 12 and 14 are inclined at a Zenith angle relative to head 16. Optionally, head 16 can be moved up and down into engagement with a tape. Even further, head 16 can be tilted into engagement with a tape so as to impart the Zenith angle biasing of this invention.

As shown in Figure 1, tape sliding surface 18 of magnetic head 16 contains a head-gap area comprising a write gap line and read gap line. The write gap line and the read gap line are each formed from a plurality of individual write or read coils per track of information, respectively.

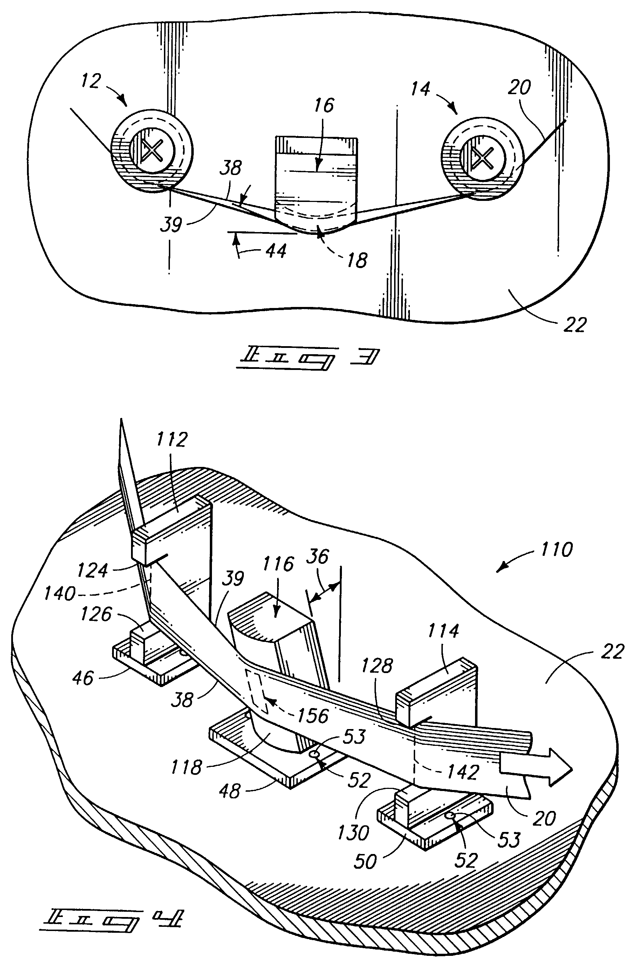

Figure 2 depicts the positioning of head 16 relative to the vertical axes of tape guides 14 and 12 (hidden from view) so as to define Zenith angle 36 operating to bias tape 20 downwardly into engagement with bottom tape guide elements 30 and 26 (hidden from view). Alternatively, head 16 can be biased to have a negative Zenith angle, causing tape 20 to ride upwardly along tape guides 14 and 12 so as to engage top tape guide elements 28 and 24 (hidden from view). Even further, head 16 can be mounted on an opposite side of tape 20 so as to bias tape 20 downwardly or upwardly, depending on whether the Zenith bias angle is positive or negative relative to the axes of guides 12 and 14. However, for the case where head 16 is presented on an opposite side of tape 20 than guides 12 and 14, the travel path of tape 20 between guides 12 and 14 is diverted so as to increase the contact surface area on guides 12 and 14 which increases the frictional forces required to move tape 20. Such a configuration is suitable where head 16 is supported on a different base than guides 12 and 14, for example, where guides 12 and 14 are possibly provided within a tape storage cassette. Alternatively, such a configuration for head 16 and guides 12 and 14 can be provided on the same base, with tape 20 being threaded between head 16 and guides 12 and 14.

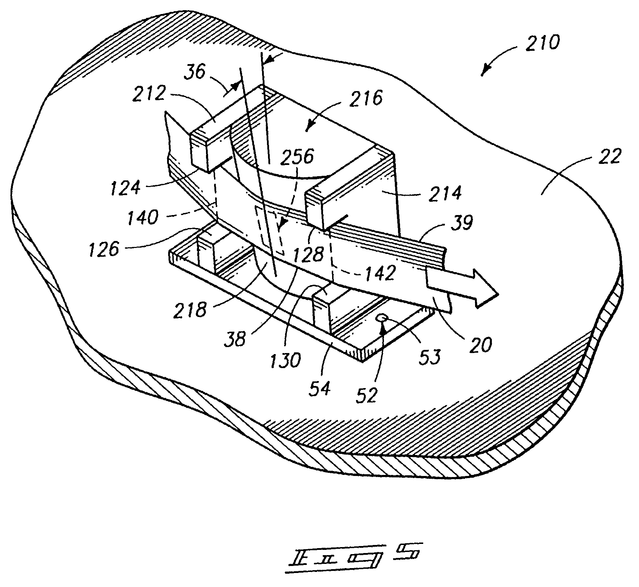

Figure 3 illustrates a change in profile of tape 20 between a substantially vertical orientation along guides 12 and 14 to a biased orientation along head 16 indicative of the Zenith angle. Head 16 is positioned to divert an otherwise straight-line travel path of tape 20 between guides 12 and 14 so as to deflect and tension tape 20 over head 16 as it travels over tape sliding surface 18 on head 16. Tape 20 engages surface 18 with a tape inclination angle 44 that is different along the top and bottom edges 39 and 38, respectively. Angle 44 is greater along top edge 39 than along bottom edge 38 as a result of the Zenith angle, which creates a transverse force on tape 20 causing it to move against bottom tape guide elements 26 and 30 (see Fig. 1).

Figure 4 depicts an alternatively constructed tape guide device 110 wherein tape guides 112 and 114 are each formed in the shape of thin, elongate brackets. Guides 112 and 114 are cut out along an edge to form tape sliding surfaces, or tape guide bearings, 140 and 142, respectively, and top and bottom tape guide edges 124, 126 and 128, 130, respectively. Guides 112 and 114 each have a mounting base 46 and 50 with spaced apart apertures 52 for mounting to base 22 via dedicated pairs of fasteners 53. Similarly, head 116 has a mounting base 48 with a pair of spaced apart apertures 52 for mounting to base 22 via a pair of fasteners 53. Head 116 is supported in biased engagement along tape sliding surface 118 with tape 20 via Zenith angle 36. Accordingly, head-gap area 156 is more accurately presented along moving tape 20 since tape wander is reduced, or eliminated, because of positive biasing of bottom edge 38 with elements 126 and 130.

Figure 5 depicts another alternatively constructed tape guide device 110 wherein tape guides 212 and 214 are integrally affixed on opposite sides of magnetic head 216, each in the shape of a thin, elongate bracket. Accordingly, head 216 and tape guides 212 and 214 are assembled together as a single, common unit. Such a construction is suitable for use with tape cassettes, for example, with audio and video cassette, where head 216 and guides 212 and 214 are supported within an audio recorder/player or a video camera recorder (VCR). Head 216 and guides 212 and 214 are securely mounted together on mounting base 54. A pair of mounting apertures 52 are preferably formed in base 54 for receiving fasteners 53 that are used to mount head 216 and guides 212 and 214 onto base 22. Tape sliding surfaces 140 and 142 are sized and positioned relative to tape sliding surface 218 such that Zenith angle 36 drives tape 20 downwardly into engagement with bottom tape guide elements 126 and 130 as tape 20 is drawn taught along surface 218 and guides 212 and 214 by a tape drive mechanism (not shown). As a result, tape 20 runs along elements 126 and 130 and sliding surface 218 with little or no lateral wander such that head-gap area 256 is presented along tape 20 in a stable and accurate manner.

Furthermore, it is to be understood that the tape guides 12, 14 (of Figs. 1-3), 112, 114 (of Fig. 4) and 212, 214 (of Fig. 5) can be constructed from any of a number of suitable materials that will not unnecessarily abrade a magnetic tape such as metal, friction reducing impregnated metals (e.g., Teflon™ impregnated metals), plastic, enforced plastic (e.g., fiber enforced plastics), ceramic, or any other suitable material.

In compliance with the statute, the invention has been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

## Claims

1. A tape guide device (10, 110, 210), comprising:
a support base (22);
a pair of tape guides (12, 14, 112, 114, 212, 214) carried by the base (22) on spaced and substantially parallel axes (33, 35), each tape guide (12, 14, 112, 114, 212, 214) having a contact section (40, 42, 140, 142) and at least one tape guide (12, 14, 112, 114, 212, 214) having at least one tape guide element (26, 30, 126, 130) for engaging one edge (38) of a ribbon tape (20) movably supported therealong; and
a magnetic head (16, 116, 216) having a tape sliding surface (18, 118, 218) supported for engagement with the ribbon tape (20) at a Zenith angle (36) relative to the tape guide axes (33, 35), the tape sliding surface (18, 118, 218) and the contact sections (40, 42, 140, 142) configured to bias the tape one edge (38) against the at least one tape guide element (26, 30, 126, 130) of the pair of tape guides (12, 14, 112, 114, 212, 214).

2. The tape guide device (210) of claim 1 wherein the pair of tape guides (212, 214) are integrally affixed to the magnetic head (216).

3. The tape guide device (10, 110) of claim 1 wherein the tape guides (12, 14, 112, 114) each comprise separate tape guides (12, 14, 112, 114) provided to be carried on opposite sides of the magnetic head (16, 116).

4. The tape guide device (10, 110, 210) of claim 1 wherein the tape guides (12, 14, 112, 114, 212, 214) each comprise a tape guide bearing surface (40, 42, 140, 142) formed from a static, non-rotating guide mechanism.

5. The tape guide device (10, 110, 210) of claim 1 wherein the magnetic head (16, 116, 216) is supported with the tape sliding surface (18, 118, 218) so as to engage a magnetic tape (20) along a same side being engaged by the tape guides (12, 14, 112, 114, 212, 214).

6. The tape guide device (10) of claim 1 wherein the tape guide (12, 14) comprises a cylindrical guide.

7. The tape guide device (10) of claim 6 wherein the tape guide element (24, 26, 28, 30) comprises a cylindrical flange member.

8. The tape guide device (110, 210) of claim 1 wherein the tape guide (112, 114) comprises a thin, elongate bracket configured to provide a tape sliding surface (140, 142) and at least one tape guide element (126, 130).

9. The tape guide device (110, 210) of claim 8 wherein the tape guide (112, 114) comprises a pair of tape guide elements (124, 126 and 128, 130), one provided along each end of the tape sliding surface (140, 142).

10. A method of controlling tape wander, comprising;
providing a pair of tape guides (12, 14, 112, 114, 212, 214) on spaced and substantially parallel axes (33, 35);
presenting a ribbon tape (20) for travel across the pair of tape guides (12, 14, 112, 114, 212, 214), each tape guide (12, 14, 112, 114, 212, 214) having a slide contact section (40, 42, 140, 142) and at least one tape guide element (26, 30, 126, 130) for engaging one edge (38) of a ribbon tape (20) movably supported therealong;
presenting a tape sliding surface (18, 118, 218) of a magnetic head (16, 116, 216) for contact with the ribbon tape (20) at a Zenith angle (36) with the tape guide axes (33, 35); and
moving the tape (20) over the magnetic head (16, 116, 216) and tape guides (12, 14, 112, 114, 212, 214) so as to create a transverse force on the tape (20), basing the tape one edge (38) against the tape guide elements (26, 30, 126, 130) of the pair of tape guides (12, 14, 112, 114, 212, 214) so as to reduce tape wander.

11. The method of claim 10 wherein the step of moving the tape (20) comprises applying tension on the tape (20) for moving the tape (20) so as to create the transverse bias force that reduces tape wander.

12. The method of claim 10 wherein the magnetic head tape sliding surface (18, 118, 218) is provided on a common tape side with the tape guides (12, 14, 112, 114, 212, 214).
